# EUROPÄISCHE PATENTANMELDUNG

(11) **EP 3 388 219 A1**
(43) Veröffentlichungstag der Anmeldung: **17.10.2018**
(21) Anmeldenummer: 17165716.6
(22) Anmeldetag: 10.04.2017
(51) Int. Cl.: B29C 45/16, B29C 67/00, B29C 69/00, B33Y 10/00, B29C 65/02, B29K 77/00

(54) **VERFAHREN ZUR HERSTELLUNG EINES KUNSTSTOFFTEILS**

(71) Anmelder: BASF SE, 67056 Ludwigshafen am Rhein (DE)
(72) Erfinder: Wuest, Andreas, 67056 Ludwigshafen (DE)
(74) Vertreter: Kudla, Karsten

(57) **Zusammenfassung**

Die Erfindung betrifft ein Verfahren zur Herstellung eines Kunststoffteils (1), folgende Schritte umfassend:
(a) Erzeugen eines ersten Formteils (11) aus einem ersten thermoplastischen Polymermaterial in einem 3D-Druckverfahren,
(b) Erzeugen eines zweiten Formteils (13) aus einem zweiten thermoplastischen Polymermaterial durch ein zweites Herstellverfahren,
(c) Fügen des ersten Formteils (11) und des zweiten Formteils (13) zum Kunststoffteil,
wobei das Herstellen des zweiten Formteils (13) und das Fügen des ersten Formteils (11) und des zweiten Formteils (13) zum Kunststoffteil (1) nacheinander oder gleichzeitig erfolgen kann.

## Beschreibung

Die Erfindung betrifft ein Verfahren zur Herstellung eines Kunststoffteils. wobei das Kunststoffteil aus mindestens zwei Formteilen aufgebaut ist.

Zur Herstellung von Kunststoffteilen sind unterschiedliche Verfahren bekannt. Übliche Verfahren sind zum Beispiel Extrusionsverfahren oder Spritzgussverfahren, wobei Extrusionsverfahren üblicherweise zur Herstellung von Profilen eingesetzt werden. Neben Extrusionsverfahren und Spritzgussverfahren hat sich in den letzten Jahren auch die Herstellung durch 3D-Druckverfahren etabliert.

Nachteil der 3D-Druckverfahren ist jedoch die im Vergleich zu Spritzgussverfahren lange Herstelldauer der Kunststoffteile und die limitierte Größe der herzustellenden Kunststoffteile. Dies ist insbesondere in der Massenherstellung aufgrund der damit verbundenen hohen Kosten nicht gewünscht.

Vorteil der 3D-Druckverfahren gegenüber üblichen Spritzgussverfahren ist jedoch die Möglichkeit auch komplexe Formteile herzustellen. Insbesondere, wenn die Formteile Hinterschnitte aufweisen sind aufwendige Werkzeuge notwendig, die zum Beispiel mit verschiebbaren Teilen ausgestattet sind, um ein Entformen des Kunststoffteils nach dem Spritzgießen zu ermöglichen.

Aufgabe der vorliegenden Erfindung ist es daher, ein Verfahren bereitzustellen, das die Herstellung von Kunststoffteilen mit komplexer Geometrie erlaubt und auch zur Massenfertigung oder Herstellung von großen Kunststoffteilen eingesetzt werden kann.

Diese Aufgabe wird gelöst durch ein Verfahren zur Herstellung eines Kunststoffteils, das folgende Schritte umfasst:
(a) Erzeugen eines ersten Formteils aus einem ersten thermoplastischen Polymermaterial in einem 3D-Druckverfahren,
(b) Erzeugen eines zweiten Formteils aus einem zweiten thermoplastischen Polymermaterial durch ein zweites Herstellverfahren,
(c) Fügen des ersten Formteils und des zweiten Formteils zum Kunststoffteil,
wobei das Herstellen des zweiten Formteils und das Fügen des ersten Formteils und des zweiten Formteils zum Kunststoffteil nacheinander oder gleichzeitig erfolgen kann.

Die Herstellung des Kunststoffteils aus zwei Formteilen erlaubt es, ein Formteil mit komplexer Geometrie durch ein aufwendigeres Herstellverfahren herzustellen und das Fertigteil dann durch ein deutlich weniger komplexes Verfahren und mit weniger aufwendigen Werkzeugen. Da das erste Formteil nur ein Teil des Kunststoffteils ist, wird durch das 3D-Druckverfahren ein Formteil hergestellt, das im Vergleich zum Fertigteil relativ klein ist und damit schneller hergestellt werden kann als wenn das komplette Kunststoffteil durch 3D-Druck erzeugt werden müsste. Zudem ist es abhängig vom Druckverfahren und bei entsprechender Größe auch möglich, mehrere Formteile gleichzeitig durch das 3D-Druckverfahren herzustellen.

In Abhängigkeit von der Form des herzustellenden Kunststoffteils kann das Kunststoffteil aus nur zwei Formteilen oder auch aus mehr als zwei Formteilen aufgebaut sein. Wenn das Kunststoffteil aus mehr als zwei Formteilen aufgebaut ist, können mehrere Formteile durch ein 3D-Druckverfahren hergestellt werden, wobei dann alle durch das 3D-Druckverfahren hergestellten Formteile mit dem zweiten Formteil verbunden werden.

Das Herstellverfahren zur Herstellung des zweiten Formteils ist zum Beispiel ein Spritzgussverfahren oder ein Extrusionsverfahren, bevorzugt ein Spritzgussverfahren. Insbesondere bei Einsatz von Spritzgussverfahren zur Herstellung des zweiten Formteils ist es möglich, das erste Formteil, oder wenn mehrere Formteile durch das 3D-Druckverfahren hergestellt werden, mehrere oder bevorzugt alle durch das 3D-Druckverfahren hergestellten Formteile in das Spritzgusswerkzeug einzulegen und anschließend das zweite Formteil an das erste Formteil oder an die mehreren durch das 3D-Druckverfahren hergestellten Formteile anzuspritzen.

Alternativ zum Anspritzen zum Fügen des ersten Formteils und des zweiten Formteils ist es auch möglich, das erste Formteil mit dem zweiten Formteil zu verschweißen, nachdem sowohl das erste als auch das zweite Formteil hergestellt worden sind. Wenn mehrere Formteile durch ein 3D-Druckverfahren hergestellt werden, so können diese auch zum Teil in das Formwerkzeug eingelegt werden, so das das zweite Formteil an die durch das 3D-Druckverfahren hergestellten und in das Werkzeugt eingelegten Formteile angespritzt wird und zusätzlich können ein oder mehrere durch das 3D-Druckverfahren hergestellte Formteile mit dem zweiten Formteil verschweißt werden.

Weiterhin ist es auch möglich, in einem ersten Schritt durch das 3D-Druckverfahren hergestellte Formteile in ein Formwerkzeug für ein Spritzgussverfahren einzulegen, das zweite Formteil durch das Spritzgussverfahren an die durch das 3D-Druckverfahren hergestellten Formteile anzuspritzen und in einem weiteren Schritt das so hergestellte Bauteil in ein weiteres Formwerkzeug für ein zweites Spritzgussverfahren einzulegen und im zweiten Spritzgussverfahren ein weiteres Formteil an das bereits hergestellte Bauteil anzuspritzen.

Bevorzugt ist es jedoch, ein oder mehrere Formteile durch ein 3D-Druckverfahren herzustellen, diese in ein Formwerkzeug für ein Spritzgussverfahren einzulegen und anschließend das zweite Formteil anzuspritzen. Durch dieses Verfahren ist es möglich, ein Kunststoffteil mit komplexer Geometrie herzustellen, für die Herstellung jedoch ein einfaches Spritzgussformwerkzeug einzusetzen.

Um eine verbesserte Haftung zwischen dem ersten Formteil und dem zweiten Formteil zu erhalten, ist es bevorzugt, wenn im ersten Formteil Öffnungen ausgebildet sind und das thermoplastische Polymermaterial des zweiten Formteils während des Anspritzens in die Öffnungen eingespritzt wird.

Die Öffnungen im ersten Bauteil können dabei zum Beispiel in Form von Löchern gestaltet sein, durch die das thermoplastische Polymermaterial des zweiten Formteils gespritzt wird. Alternativ ist es jedoch auch möglich, die Öffnungen als Vertiefungen zu gestalten, in die das thermoplastische Polymermaterial des zweiten Formteils eingespritzt wird. Wenn die Öffnungen als Vertiefungen gestaltet sind, ist es besonders bevorzugt, wenn der Durchmesser der Öffnungen von der Oberfläche des Formteils ins Formteilinnere hin zunimmt, um so eine weiter verbesserte Haftung des ersten Formteils mit dem zweiten Formteil zu erhalten.

Weiterhin ist es auch möglich, die Öffnungen in Form eine Perforation oder als Poren im Formteil zu gestalten. Auch in diesen Fällen wird eine verbesserte Haftung erhalten, indem das thermoplastische Polymermaterial des zweiten Formteils beim Anspritzen an das erste Formteil in die Perforation oder die Poren eindringt.

Wenn das zweite Formteil jedoch nicht durch ein Spritzgussverfahren hergestellt wird sondern beispielsweise ein durch ein Extrusionsverfahren hergestelltes Profil ist, mit dem ein weiteres Formteil verbunden werden soll, so wird das erste durch 3D-Druck hergestellte Formteil mit dem zweiten Formteil durch ein Schweißverfahren verbunden.

Als 3D-Druckverfahren zur Herstellung des ersten Formteils kann jedes beliebige und dem Fachmannbekannte 3D-Druckverfahren eingesetzt werden. Übliche 3D-Druckverfahren sind zum Beispiel Lasersinterverfahren oder auch Schmelzschichtverfahren (auch als Fused Deposition Modeling bezeichnet).

Bei Lasersinterverfahren wird schichtweise ein Polymerpulver in eine Form mit versenkbarem Boden eingebracht und jeweils nach dem Einbringen einer Schicht werden die Partikel des Polymerpulvers entsprechend einem vorgegebenen Muster mit einem Laser miteinander verschweißt. Gleichzeitig erfolgt durch das Verschweißen eine Verbindung mit dem Material der darunter liegenden Schicht. Nach der Fertigstellung wird das Bauteil entnommen und das überschüssige Pulver wird entfernt. Da immer eine vollständige Schicht Polymerpulver eingebracht wird, ist es möglich, komplexe Strukturen ohne Stützstrukturen herzustellen. Für überragende Teile oder Hinterschnitte liegt das verschweißte Polymerpulver der einer hervorstehenden Schicht auf dem nicht verschweißten Polymerpulver auf. Nach dem Entnehmen und Entfernen des überschüssigen Pulvers ist das so hergestellte Formteil einsetzbar.

Bei Schmelzschichtverfahren wird ein dünner Polymerfaden aufgeschmolzen und entsprechend einem vorgegebenen Muster schichtweise aufgetragen. Insbesondere bei überstehenden Teilen ist hier jedoch die Herstellung einer Stützstruktur erforderlich, die nach Fertigstellung des Formteils erst noch entfernt werden muss. Die Auswahl des 3D-Druckverfahrens kann dabei zum Beispiel aufgrund der Bauteilgeometrie oder der Materialanforderungen erfolgen. Prinzipiell ist aber jedes 3D-Druckverfahren geeignet.

Vorteil aller 3D-Druckverfahren ist, dass Formteile mit einer beliebigen Geometrie hergestellt werden können. Auch komplexe Geometrien lassen sich somit auf einfache Weise ohne Einsatz komplexer Werkzeuge herstellen.

Mit dem erfindungsgemäßen Verfahren lassen sich zum Beispiel Kunststoffteile herstellen, die einen Hinterschnitt aufweisen. In diesem Fall wird ein erstes Formteil hergestellt, das mindestens einen Hinterschnitt umfasst. Wenn die Hinterschnitte an unterschiedlichen Positionen des Kunststoffteils angeordnet sind, können auch mehrere erste Formteile hergestellt werden, die jeweils mindestens einen Hinterschnitt aufweisen. Das erste Formteil oder die mehreren ersten Formteile werden dann, wie vorstehend beschrieben, in das Formwerkzeug für das Spritzgussverfahren eingelegt und anschließend wird das zweite Formteil angespritzt.

Um zu verhindern, dass Polymermaterial des zweiten Formteils in den durch den Hinterschnitt gebildeten Freiraum eindringt, wird vorzugsweise vor dem Einlegen des ersten Formteils in das Formwerkzeug ein Einsatz eingelegt, das den Hohlraum unterhalb des Hinterschnitts ausfüllt. Nach dem Anspritzen des zweiten Formteils und der Entnahme des Kunststoffteils aus dem Formwerkzeug wird der Einsatz wieder entfernt.

Wenn der Hinterschnitt in einem Bereich im Formwerkzeug ist, in den kein Polymermaterial gelangen kann, kann auf den Einsatz auch verzichtet werden. Dies ist zum Beispiel dann der Fall, wenn am ersten Formteil ein Fuß ausgebildet ist, mit dem ein Hohlraum im Werkzeug, in dem der Hinterschnitt liegt, verschlossen werden kann.

In einer alternativen Ausführungsform ist es für die Herstellung eines Kunststoffteils mit komplexer Geometrie, insbesondere mit einem komplex geformten Hinterschnitt, der sonst nur mit Hilfe sehr komplexer Werkzeuggeometrien hergestellt werden kann möglich, das erste Formteil mit komplexer Geometrie zu fertigen, anschließend das zweite Formteil in einem Spritzgussprozess an das erste Formteil anzuspritzen und anschließend das erste Formteil zu entfernen, so dass die Negativform des ersten Formteils einen Teil der Geometrie des zweiten Formteils bildet. Für die Herstellung von Hinterschnitten mit komplexer Geometrie wird dabei das erste Formteil vorzugsweise bei der Herstellung des zweiten Formteils vollständig oder teilweise umspritzt und nach dem Erstarren des Kunststoffs des zweiten Formteils entfernt. Hierbei ist es durchaus möglich, dass das erste Formteil zur Entfernung zerstört werden muss. Auf dieses Weise ist es möglich, auch komplexe Geometrien herzustellen, ohne auf komplexe Werkzeuge mit vielen Schiebern zurückgreifen zu müssen.

Alternativ zur Entfernung des ersten Formteils ist es auch möglich, dieses als sogenannten verlorenen Kern im Bauteil zu belassen. Auf diese Weise können größere Wanddicken erzeugt werden als mit einem herkömmlichen Spritzgussverfahren, da große Wanddicken im Spritzgussverfahren zu längeren Zykluszeiten führen und zudem aufgrund der großen Kunststoffmenge beim Abkühlen Lunker entstehen können.

Als Material für den Einsatz kann jedes geeignete Material genutzt werden, das sich nicht mit dem eingesetzten thermoplastischen Polymermaterial des ersten Formteils und des zweiten Formteils verbindet und so nach dem Angießen des zweiten Formteils auf einfache Weise wieder entnommen werden kann.

Als thermoplastisches Polymermaterial für das erste Formteil und das zweite Formteil kann jedes beliebige thermoplastische Polymermaterial eingesetzt werden. Übliche thermoplastische Polymere sind zum Beispiel Polyolefine, Polyvinylverbindungen, thermoplastische Polyurethane, Polyamide, Styrolpolymere, thermoplastische Polyester und Polycarbonate sowie Copolymere und Mischungen. Durch die zu erwartenden hohen thermischen Belastungen des ersten Formteils während des Fügens mit dem zweiten Formteil, insbesondere, wenn das zweite Formteil in einem Spritzgussprozess angespritzt wird, sind insbesondere Hochtemperaturkunststoffe wie Polyetheretherketon (PEEK), Polyetherimid (PEI) oder Thermoplaste auf Basis von Polysulfon (PSU), Polyethersulfon (PESU) und Polyphenylsulfon (PPSU) vorteilhaft.

Für das erste Formteil und für das zweite Formteil können unterschiedliche thermoplastische Polymere eingesetzt werden. Wenn unterschiedliche thermoplastische Polymere für das erste Formteil und das zweite Formteil eingesetzt werden, ist es notwendig, dass sich die Polymere verschweißen lassen. Dies ist nicht zwingend notwendig, wenn im ersten Formteil Öffnungen ausgebildet sind, in die das thermoplastische Polymermaterial während des Anspritzens des zweiten Formteils eindringt. Insbesondere dann, wenn das erste Formteil zur Herstellung einer komplexen Geometrie, beispielsweise eines Hinterschnitts eingesetzt werden soll und nach der Herstellung des zweiten Formteils wieder entfernt wird, ist es von Vorteil wenn die beiden Materialien inkompatibel in ihrer Anhaftung sind. Dadurch wird die nachfolgende Trennung von erstem und zweitem Formteil begünstigt.

Bevorzugt ist es jedoch, wenn das erste thermoplastische Polymermaterial das gleiche Polymermaterial ist wie das zweite thermoplastische Polymermaterial. Besonders bevorzugt ist das thermoplastische Polymermaterial ein Polyamid.

Ausführungsbeispiele der Erfindung sind in den Figuren dargestellt und werden in der nachfolgenden Beschreibung näher erläutert.

Es zeigen:
- Figur 1: einen Querschnitt durch ein Kunststoffteil mit einer Geometrie, die auf einfache Weise durch ein Spritzgussverfahren herstellbar ist,
- Figur 2: einen Querschnitt durch ein Kunststoffteil mit einer komplexeren Geometrie,
- Figur 3: einen Querschnitt durch ein Kunststoffteil mit einer Geometrie wie das Kunststoffteil in Figur 2 aufgebaut aus einem ersten Formteil und einem zweiten Formteil.

Ein Spritzgusswerkzeug ist normalerweise aus zwei Teilen aufgebaut, die gegeneinander gestellt werden und zwischen denen ein Hohlraum ausgebildet ist, in den die Kunststoffformmasse eingespritzt wird. Nach dem Erstarren wird das Werkzeug geöffnet und das so hergestellte Kunststoffteil entnommen. Dieses Herstellverfahren bedingt, dass mit einer konstruktiv einfachen Form, die aus nur zwei Teilen besteht, keine komplexen Geometrien und insbesondere keine Hinterschnitte geformt werden können.

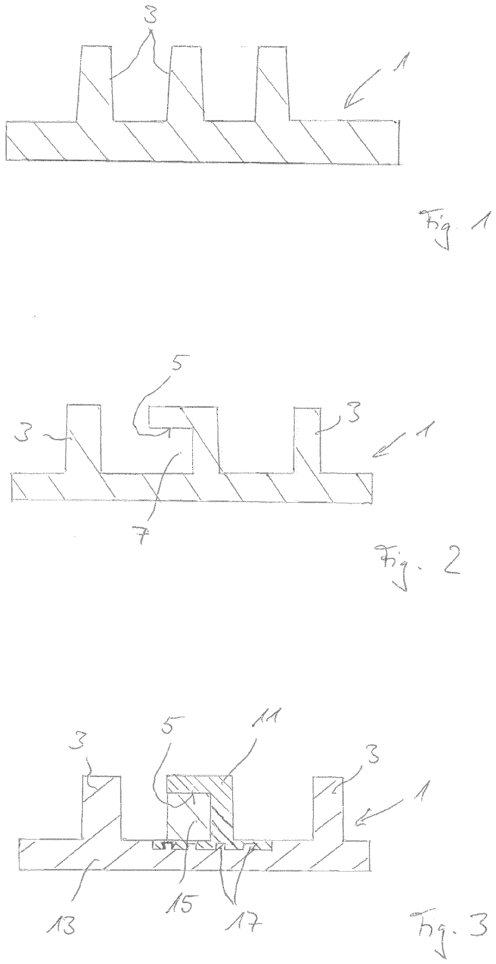

Kunststoffteile 1, die in einem einfachen Spritzgusswerkzeug hergestellt werden können, können lediglich Erhebungen oder Vertiefungen aufweisen, da sonst das Formwerkzeug nach dem Erstarren der Kunststoffformmasse nicht mehr geöffnet werden kann ohne das so hergestellte Kunststoffteil zu beschädigen. Ein solches Kunststoffteil 1 ist beispielhaft in Figur 1 im Querschnitt dargestellt. Das Kunststoffteil 1 weist lediglich Erhebungen 3 auf, von denen das Formwerkzeug auf einfache Weise abgehoben werden kann. Derartige Erhebungen 3 sind zum Beispiel Rippen oder Stege.

Sobald die Geometrie jedoch komplexer ist, insbesondere Hinterschnitte aufweist, lässt sich ein solches Spritzgusswerkzeug nicht mehr einsetzen. Derzeit werden hierzu zum Beispiel komplexe mehrteilige Werkzeuge eingesetzt, die zum Beispiel Schieber aufweisen, die vor dem Entformen aus dem Kunststoffteil herausgezogen werden.

Derart komplexe Werkzeuge sind bereits notwendig, wenn das Kunststoffteil 1 einen Hinterschnitt 5 aufweist, wie er in Figur 2 dargestellt ist. Um im Spritzgussverfahren so einen Hinterschnitt 5 herstellen zu können, ist es notwendig, dass der Freiraum 7 unterhalb des Hinterschnitts 5 vom Werkzeug ausgefüllt wird. Nach dem Spritzgießen des Kunststoffteils muss zunächst der Teil des Werkzeugs aus dem Freiraum 7 unterhalb des Hinterschnitts 5 entfernt werden, bevor das obere Werkzeugteil abgehoben werden kann.

Um eine einfachere Herstellung eines solchen Kunststoffteils zu ermöglichen, wird dieses erfindungsgemäß aus einem ersten Formteil 11 und einem zweiten Formteil 13 hergestellt. Hierzu wird zunächst das erste Formteil 11 hergestellt, das eine komplexe Geometrie, beispielsweise einen Hinterschnitt aufweist. Um eine komplexe Geometrie herzustellen, wird das erste Formteil 11 durch ein 3D-Druckverfahren hergestellt.

Das zweite Formteil 13, das eine einfachere Geometrie aufweist, kann zum Beispiel durch ein Spritzgussverfahren mit einem einfachen Werkzeug hergestellt werden. Das erste Formteil 11 und das zweite Formteil 13 können anschließend miteinander verbunden werden. Bevorzugt ist es jedoch, dass das erste Formteil 11 nach der Herstellung in ein Spritzgusswerkzeug eingelegt wird und anschließend das zweite Formteil 13 an das erste Formteil 11 angespritzt wird. Um zu verhindern, dass beim Anspritzen Polymermaterial in den Freiraum unterhalb des Hinterschnitts gelangt, wird in diesen ein Einsatz 15 eingelegt, das den Freiraum ausfüllt. Nach dem Erstarren des Polymermaterials für das zweite Formteil 13 und der Entnahme des Kunststoffteils 1 aus dem Formwerkzeug kann dann Einsatz 15 entfernt werden.

Um eine verbesserte Verbindung des ersten Formteils 11 und des zweiten Formteils 13 zu erhalten, sind vorzugsweise im ersten Formteil 11 Öffnungen 17 ausgebildet, in die das Polymermaterial beim Anspritzen des zweiten Formteils 13 eingespritzt wird. Dies führt neben der Verbindung durch Anschmelzen zusätzlich zu einer Verstärkung der Verbindung, da die Formteile 11, 13 an der Verbindungsstelle 19 ineinandergreifen und so eine zusätzliche physikalische Verbindung gegeben ist. Die Öffnungen 17 können wie hier dargestellt in Form von Sacklöchern ausgebildet sein. Alternativ ist es auch möglich, durchgehende Löcher im ersten Formteil 11 als Öffnungen 17 vorzusehen. Neben Sacklöchern oder durchgehenden Löchern können die Öffnungen auch in Form einer beliebigen Porenstruktur ausgebildet sein. Insbesondere bei durchgehenden Löchern oder Sacklöchern ist es weiterhin vorteilhaft, wenn der Durchmesser der Öffnungen 17 nicht konstant ist sondern sich aufweitet und wieder verjüngt. Hierdurch wird eine weiter verbesserte physikalische Verbindung des ersten Formteils 11 und des zweiten Formteils 13 erhalten. Auch ein gebogener Verlauf führt im Vergleich zu einem linear verlaufenden Loch zu einem verbesserten Halt. Der verbesserte Halt ergibt sich bei nicht linear verlaufenden Löchern, sich ändernden Durchmessern oder einer Porenstruktur dadurch, dass das erste Formteil 11 nicht einfach vom zweiten Formteil 13 abgehoben werden kann, da das Material des zweiten Formteils 13 aufgrund der Form nicht aus den Öffnungen herausgezogen werden kann.

Neben der hier dargestellten Ausführungsform, bei der das erste Formteil die komplexe Geometrie aufweist, ist es alternativ auch möglich, insbesondere dann, wenn das zweite Formteil durch Spritzguss hergestellt wird, das erste Formteil als Negativform herzustellen, dieses im Spritzgussprozess zu umspritzen und anschließend zu entfernen, so dass ein Kunststoffteil mit komplexer Geometrie, insbesondere mit Hinterschnitten ohne den Einsatz eines aufwendigen Werkzeugs mit Schiebern hergestellt werden kann.

## Patentansprüche

1. Verfahren zur Herstellung eines Kunststoffteils (1), folgende Schritte umfassend:
(a) Erzeugen eines ersten Formteils (11) aus einem ersten thermoplastischen Polymermaterial in einem 3D-Druckverfahren,
(b) Erzeugen eines zweiten Formteils (13) aus einem zweiten thermoplastischen Polymermaterial durch ein zweites Herstellverfahren,
(c) Fügen des ersten Formteils (11) und des zweiten Formteils (13) zum Kunststoffteil,
wobei das Herstellen des zweiten Formteils (13) und das Fügen des ersten Formteils (11) und des zweiten Formteils (13) zum Kunststoffteil (1) nacheinander oder gleichzeitig erfolgen kann.

2. Verfahren gemäß Anspruch 1, **dadurch gekennzeichnet, dass** das zweite Herstellverfahren ein Spritzgussverfahren ist.

3. Verfahren gemäß Anspruch 1 oder 2, **dadurch gekennzeichnet, dass** das 3D-Druckverfahren ein Lasersinterverfahren oder ein Schmelzschichtverfahren ist.

4. Verfahren gemäß einem der Ansprüche 1 bis 3, **dadurch gekennzeichnet, dass** das erste Formteil (11) mindestens einen Hinterschnitt (15) aufweist.

5. Verfahren gemäß einem der Ansprüche 1 bis 4, **dadurch gekennzeichnet, dass** zum Fügen des ersten Formteils (11) und des zweiten Formteils (13) zum Kunststoffteil (1) das erste Formteil (11) in ein Spritzgusswerkzeug eingelegt wird und das zweite Formteil (13) an das erste Formteil (11) angespritzt wird.

6. Verfahren gemäß Anspruch 5, **dadurch gekennzeichnet, dass** im ersten Formteil (11) Öffnungen (17) ausgebildet sind und das thermoplastische Polymermaterial des zweiten Formteils (13) während des Anspritzens in die Öffnungen (17) eingespritzt wird.

7. Verfahren gemäß einem der Ansprüche 1 bis 4, **dadurch gekennzeichnet, dass** das erste Formteil (11) und das zweite Formteil (13) durch ein Schweißverfahren zum Kunststoffteil (1) gefügt werden.

8. Verfahren gemäß einem der Ansprüche 1 bis 7, **dadurch gekennzeichnet, dass** das erste thermoplastische Polymermaterial das gleiche Polymermaterial ist wie das zweite thermoplastische Polymermaterial.

9. Verfahren gemäß einem der Ansprüche 1 bis 8, **dadurch gekennzeichnet, dass** das thermoplastische Polymermaterial ein Polyamid ist.

10. Verfahren gemäß Anspruch 2, **dadurch gekennzeichnet, dass** das erste Formteil nach der Herstellung des zweiten Formteils zur Erzeugung komplexer Geometrien am zweiten Formteil wieder entfernt wird.
